# EUROPÄISCHE PATENTSCHRIFT

(11) **EP 2 455 553 B1**
(45) Veröffentlichungstag und Bekanntmachung des Hinweises auf die Patenterteilung: **15.07.2020**
(21) Anmeldenummer: 11008675.8
(22) Anmeldetag: 28.10.2011
(51) Int. Cl.: E02F 9/22, F15B 15/14, F15B 11/064, F16F 9/36

(54) **Arbeitsgerät**
Work device
Appareil de travail

(30) Priorität: 17.11.2010 DE 102010051665
(43) Veröffentlichungstag der Anmeldung: 23.05.2012
(73) Patentinhaber: Liebherr-Hydraulikbagger GmbH, 88457 Kirchdorf/Iller (DE)
(72) Erfinder: Lavergne, Hans-Peter, 87779 Trunkelsberg (DE)
(74) Vertreter: Laufhütte, Dieter

(56) Entgegenhaltungen:
- EP-A1- 1 319 465
- EP-A1- 2 146 009
- EP-A2- 2 148 014
- WO-A1-2004/113622
- WO-A1-2006/005330
- US-A- 4 483 141
- US-A1- 2010 038 179

## Beschreibung

Die vorliegende Erfindung betrifft ein Arbeitsgerät mit einem über mindestens einen Arbeits-Antrieb bewegbaren Element, wobei mindestens ein Energierückgewinnungszylinder zur Energierückgewinnung aus der Bewegung des bewegbaren Elements vorgesehen ist, welcher eine mit Gas befüllte Kammer aufweist. Insbesondere handelt es sich bei dem erfindungsgemäßen Arbeitsgerät um ein verfahrbares Arbeitsgerät, insbesondere um einen Bagger oder eine Maschine zum Materialumschlag. Insbesondere umfaßt der Arbeitsantrieb dabei einen Arbeits-Hydraulikzylinder.

Die mit Gas befüllte Kammer des Energierückgewinnungszylinders wird bei solchen Arbeitsgeräten bei einem Absenken des bewegbaren Elementes komprimiert und speichert so die potentielle Energie, um diese bei einer Aufwärtsbewegung des bewegbaren Elementes zur Unterstützung des Arbeits-Antriebs, insbesondere des Arbeits-Hydraulikzylinders wieder abzugeben.

Aus der WO 2004 / 113 622 und der EP 2 146 009 A1 sind Arbeitsgeräte mit Energierückführungszylindern zur Energierückgewinnung aus der Bewegung eines bewegbaren Elements bekannt.

Aus der DE 10 2008 034 582 A1 ist ferner ein Arbeitsgerät bekannt, bei welchem die mit Gas befüllte Kammer des Energierückgewinnungszylinders durch die mit Gas gefüllte Bodenseite des Energierückgewinnungszylinders sowie die hohle Kolbenstange des Energierückgewinnungszylinders gebildet wird.

Die WO 2006 / 005 330 A1 offenbart einen Gasdruckzylinder mit einer Dichtungsanordnung, welche einen unter Druck stehenden Arbeitsraum gegen ein Außenvolumen abdichtet, mit einem arbeitsraumseitigen L-förmigen Dichtring, einem arbeitsraumabgewandten U-förmigen Dichtring und einem dazwischen angeordnetem Schmiermittelraum. Das Schmiermittel kann bei Überdruck über eine Ventilvorrichtung in den Arbeitsraum abfließen, wohingegen eine Entlüftung des Schmiermittelraums über den arbeitsraumseitigen L-förmigen Dichtring erfolgt.

Die EP 1 319 465 A1 zeigt eine Dichtung mit zwei ringförmigen Schmiermittelkammern, welche über Schmiermittelleitungen und Rückschlagventile mit einem Schmiermitteltank verbunden sind.

Aus der US 2010 / 0 038 179 A1 ist ein Gasdruckzylinder mit einer Dichtungsanordnung bekannt, welche einen mit Öl gefüllten Ringraum umfasst, wobei das Ölvon dem Boden des Gasdruckzylinders über Ölleitungen und ein oder mehrere Rückschlagventile in den Ringraum geführt wird, wobei das oder die Rückschlagventile eine Öffnungsrichtung in Richtung des mit Öl gefüllten Ringraums aufweisen.

Aufgabe der vorliegenden Erfindung ist es, ein Arbeitsgerät mit einem Energierückgewinnungszylinder zur Verfügung zu stellen, welcher ein verbessertes Dichtungssystem der mit Gas gefüllten Kammer aufweist.

Erfindungsgemäß wird diese Aufgabe durch ein Arbeitsgerät gemäß Anspruch 1 gelöst. Die vorliegende Erfindung zeigt dabei ein Arbeitsgerät, insbesondere ein verfahrbares Arbeitsgerät, insbesondere einen Bagger oder eine Maschine zum Materialumschlag, mit einem über mindestens einen Arbeits-Antrieb bewegbaren Element, wobei mindestens ein Energierückgewinnungszylinder zur Energierückgewinnung aus der Bewegung des bewegbaren Elementes vorgesehen ist, welcher einen Zylindermantel und eine Zylinderstange aufweist, wobei der Zylindermantel eine mit Gas befüllte Kammer definiert. Insbesondere umfaßt der Arbeitsantrieb dabei einen Arbeits-Hydraulikzylinder.

Erfindungsgemäß ist dabei eine Dichtungsanordnung zur Abdichtung der mit Gas gefüllten Kammer vorgesehen, welche am Ende des Zylindermantels angeordnet ist und einen mit Öl gefüllten Ringraum umfaßt. Dabei existiert anschließend an die Dichtungsanordnung im Inneren des Zylindermantels zwischen der Außenfläche der Zylinderstange und der Innenseite des Zylindermantels ein mit Gas gefüllter Ringraum, welcher einen Teil der mit Gas gefüllten Kammer bildet. Das durch den mit Öl gefüllten Ringraum zur Verfügung gestellte Ölpolster stellt eine zusätzliche Barriere gegen eine mögliche Gasdiffusion zur Verfügung, welche eine erheblich verbesserte Dichtwirkung aufweist.

Darüber hinaus ist ein Verbindungskanal zwischen dem mit Öl gefüllten Ringraum und der mit Gas gefüllten Kammer vorgesehen. Da beim Betrieb des Energierückgewinnungszylinders nicht verhindert werden kann, daß Gas in den mit Öl gefüllten Ringraum gelangt, sorgt der Verbindungskanal erfindungsgemäß für einen Druckausgleich und ermöglicht es dem Gas, aus dem Ringraum zu entweichen.

Ferner ist in dem Verbindungskanal ein Rückschlagventil angeordnet, welches mit der Öffnungsrichtung von dem mit Öl gefüllten Ringraum zu der mit Gas gefüllten Kammer ausgerichtet ist. Hierdurch kann Gas aus dem mit Öl gefüllten Ringraum in die mit Gas gefüllte Kammer entweichen, während verhindert wird, daß Gas aus der mit Gas gefüllten Kammer über den Verbindungskanal in den Ringraum gepreßt wird. Hierdurch kann verhindert werden, daß das Öl aus dem Ringraum gepreßt wird.

Vorteilhafterweise ist vorgesehen, dass der Verbindungskanal im Wesentlichen parallel zur Längsachse des Energierückgewinnungszylinders verläuft.

Vorteilhafterweise umfaßt die Dichtungsanordnung weiterhin eine Gasdichtung. Durch die Kombination aus einer Gasdichtung und den mit Öl gefüllten Ringraum wird eine besonders gute Abdichtung der mit Gas gefüllten Kammer bewirkt. Vorteilhafterweise ist dabei die Gasdichtung zwischen dem mit Öl gefüllten Ringraum und der mit Gas gefüllten Kammer angeordnet.

In weiterhin vorteilhafter Weise umfaßt die Dichtungsanordnung weiterhin eine Hydraulikdichtung. Diese verhindert, daß Hydrauliköl aus dem mit Öl gefüllten Ringraum entweicht. Vorteilhafterweise ist die Hydraulikdichtung dabei im Bezug auf die mit Gas gefüllte Kammer nach dem mit Öl gefüllten Ringraum angeordnet. Insbesondere ist die Hydraulikdichtung damit zwischen dem mit Öl gefüllten Ringraum und dem Außenraum angeordnet. Die Hydraulikdichtung kann dabei eine oder mehrere Dichtungsanordnungen, insbesondere Dichtringe umfassen.

In weiterhin vorteilhafter Weise weist der mit Öl gefüllte Ringraum auf einer Seite eine Entlüftungsstelle auf. Vorteilhafterweise kann über diese Entlüftungsstelle Gas aus dem Ringraum entweichen.

Vorteilhafterweise ist dabei die Entlüftungsstelle an der höchsten Position des Ringraumes angeordnet. Die Entlüftungsstelle ist damit an einer Position angeordnet, an welcher sich das Gas sammelt. Insbesondere ist dabei der Energierückgewinnungszylinder so am Arbeitsgerät angeordnet, daß seine Längsachse schräg oder waagrecht an dem Arbeitsgerät angeordnet ist, vorteilhafterweise so, daß die Längsachse in jeder Arbeitsposition schräg oder waagrecht angeordnet ist. Die Entlüftungsstelle erstreckt sich dann in vorteilhafter Weise in radialer Richtung vom Ringraum nach oben hin.

Vorteilhafterweise verbindet dabei der Verbindungskanal, welcher oben beschrieben wurde, die Entlüftungsstelle des Ringraums mit der mit Gas gefüllten Kammer.

In weiterhin vorteilhafter Weise ist vorgesehen, daß der mit Öl gefüllte Ringraum der Schmierung des Energierückgewinnungszylinders dient. Insbesondere dient er dabei als Ölreservoir zur Schmierung für die Dichtungen, Abstreifer und Führungsbänder. Der erfindungsgemäße Energierückgewinnungszylinder kann so ohne einen Anschluß an das Hydrauliksystem betrieben werden.

Insbesondere kann der Energierückgewinnungszylinder der vorliegenden Erfindung als einseitiger Zylinder mit nur einem Druckraum ausgeführt sein. Dieser eine Druckraum ist dann mit Gas gefüllt. Die Schmierung erfolgt dann über den mit Öl gefüllten Ringraum, ohne daß der Anschluß eines zweiten Zylinderraums an das Hydrauliksystem notwendig wäre. Wenn dies gewünscht ist, kann die mit Gas gefüllte Bodenseite des Zylinders aber an das Hydrauliksystem angeschlossen werden.

In weiterhin vorteilhafter Weise ist der Energierückgewinnungszylinder bodenseitig mit Gas befüllt, wobei die Dichtungsanordnung zwischen Kolbenstange und Zylindermantel angeordnet ist.

In weiterhin vorteilhafter Weise ist dabei die Dichtungsanordnung am Zylindermantel angeordnet. Insbesondere ist die Dichtungsanordnung dabei am Ende des Zylindermantels an dessen Innenseite angeordnet. Insbesondere ist dabei der mit Öl gefüllte Ringraum am bzw. im Zylindermantel angeordnet. Weiterhin sind vorteilhafterweise im Zylindermantel Ringräume für die Gasdichtung und/oder die Hydraulikdichtung vorgesehen.

Die vorliegende Erfindung kann insbesondere bei einem Energierückgewinnungszylinder eingesetzt werden, dessen Kolbenstange hohl ausgeführt ist.

Vorteilhafterweise sind erfindungsgemäß am Kolben der Kolbenstange Führungselemente zur Führung des Kolbens im Zylindermantel vorgesehen, welche nicht dichtend ausgeführt sind. Hierdurch steht der dünne Ringraum zwischen der Außenfläche der Kolbenstange und der Innenfläche des Zylindermantels fluidisch mit der mit Gas gefüllten Bodenseite in Verbindung, und ermöglicht so einen Druckausgleich.

Vorteilhafterweise verbindet der Verbindungskanal dabei den mit Gas gefüllten Ringraum zwischen der Außenfläche der Kolbenstange und der Innenfläche des Zylindermantels mit dem mit Öl gefüllten Ringraum.

Neben dem erfindungsgemäßen Arbeitsgerät umfaßt die vorliegende Erfindung weiterhin ein Energierückgewinnungszylinder für ein Arbeitsgerät, wie es oben beschrieben wurde. Insbesondere weist der erfindungsgemäße Energierückgewinnungszylinder dabei eine mit Gas gefüllte Kammer auf, wobei eine Dichtungsanordnung zur Abdichtung der mit Gas gefüllten Kammer vorgesehen ist, welche einen mit Öl gefüllten Ringraum umfaßt.

In vorteilhafter Weise ist der Energierückgewinnungszylinder dabei so ausgeführt, wie dies oben näher dargestellt wurde.

Besonders bevorzugte Einsatzmöglichkeiten der vorliegenden Erfindung sollen nun noch einmal kurz beschrieben werden:
Bei dem erfindungsgemäßen Arbeitsgerät handelt es sich insbesondere um ein verfahrbares Arbeitsgerät, insbesondere ein Bagger oder eine Maschine zum Materialumschlag.

Dieses weist ein über mindestens einen Arbeits-Antrieb bewegbares Element auf, wobei mindestens ein Energierückgewinnungszylinder zur Energierückgewinnung aus der Bewegung des bewegbaren Elements vorgesehen ist. Als Arbeitsantrieb wird vorteilhafterweise ein Arbeits-Hydraulikzylinder eingesetzt.

Dabei dient der Energierückgewinnungszylinder mit der mit Gas befüllten Kammer selbst als Energiespeicher für die Energierückgewinnung aus der Bewegung des bewegbaren Elements. Der von der Bodenseite des Energierückgewinnungszylinders gebildete Raum ist dabei vorteilhafterweise mit unter Druck stehendem Gas befüllt, welches bei einer Bewegung der Kolbenstange gegen den Boden komprimiert wird. Die dabei gespeicherte Energie steht dann bei einer Aufwärtsbewegung der Kolbenstange zur Unterstützung des Arbeits-Antriebs wieder zur Verfügung. In weiterhin vorteilhafter Weise ist die Kolbenstange des Energierückgewinnungszylinders hohl und zur Bodenseite hin offen, so dass das Innere der Kolbenstange einen Teil der mit Gas befüllten Kammer bildet.

Das bewegbare Element des erfindungsgemäßen Arbeitsgerätes ist vorteilhafterweise am Arbeitsgerät um eine vertikale Drehachse schwenkbar angelenkt und über den oder die Arbeits-Antrieb in einer vertikalen Schwenkebene verschwenkbar. Insbesondere handelt es sich bei dem bewegbaren Element dabei um den Stiel eines Baggers oder den Ausleger einer Maschine zum Materialumschlag. Weiterhin vorteilhafterweise weist das verfahrbare Arbeitsgerät dabei einen Unterwagen mit Fahrwerk und einen darauf um eine vertikale Drehachse drehbar angeordneten Oberwagen auf, an welchem das bewegliche Element angelenkt ist.

Am bewegbaren Element kann dabei ein Arbeitswerkzeug, zum Beispiel eine Schaufel oder ein Greifer, angeordnet sein. Beim Absenken des bewegbaren Elementes wird die potentielle Energie des bewegbaren Elementes und des Arbeitswerkzeugs über den Energierückgewinnungszylinder gespeichert, um bei der Aufwärtsbewegung des bewegbaren Elements das Ausrüstungsgewicht zumindest teilweise wieder zu kompensieren. Hierdurch muß über die Arbeits-Antriebe weniger Energie aufgewendet werden, um das bewegbare Element nach oben zu bewegen. Hierdurch verbessert sich die Energiebilanz des Arbeitsgerätes, da weniger installierte Motorleistung benötigt wird und der Kraftstoffverbrauch gesenkt wird.

Der erfindungsgemäße Energierückgewinnungszylinder ist dabei vorteilhafterweise wie der oder die Arbeits-Hydraulikzylinder zwischen einem Oberwagen des Arbeitsgerätes und dem bewegbaren Element angeordnet. Der Energierückgewinnungszylinder bewegt sich damit bei einer Bewegung des bewegbaren Elementes gleichzeitig zum Arbeits-Hydraulikzylinder.

Die vorliegende Erfindung wird nun anhand von Ausführungsbeispielen sowie Zeichnungen näher beschrieben.

Dabei zeigen
- Fig. 1: ein Ausführungsbeispiel eines erfindungsgemäßen Arbeitsgerätes mit zwei Arbeits-Hydraulikzylindern und einem Energierückgewinnungszylinder,
- Fig. 2 a: eine Prinzipdarstellung einer ersten Variante des erfindungsgemäßen Energierückgewinnungszylinders,

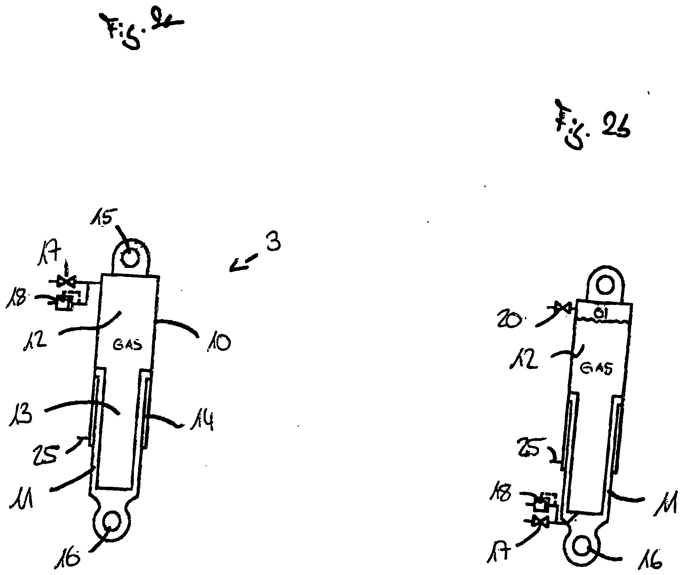

- Fig. 2 b: eine Prinzipdarstellung eines zweiten Variante des erfindungsgemäßen Energierückgewinnungszylinders,

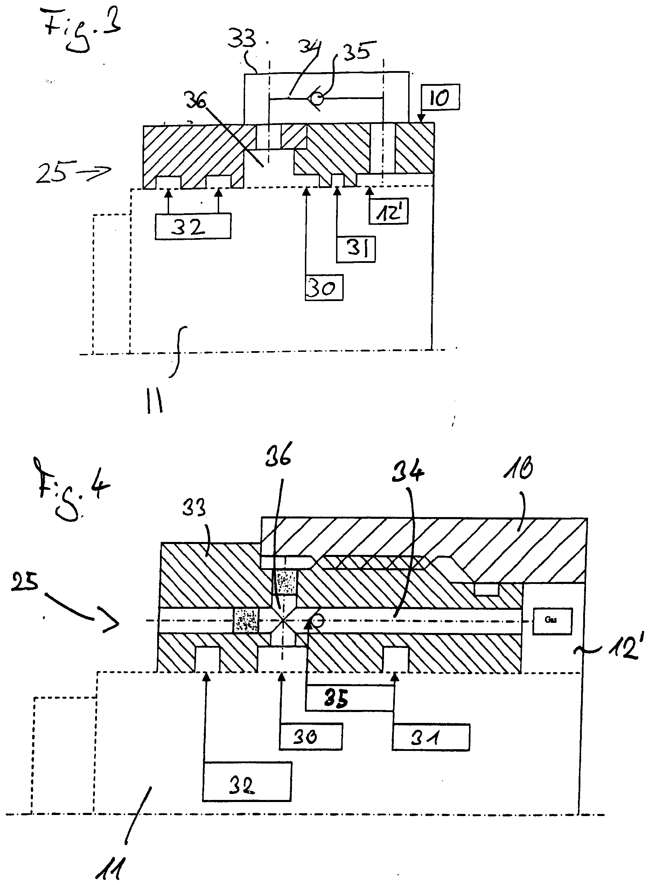

- Fig. 3: ein erstes Ausführungsbeispiel einer Dichtungsanordnung gemäß der vorliegenden Erfindung und
- Fig. 4: ein zweites Ausführungsbeispiel einer Dichtungsanordnung gemäß der vorliegenden Erfindung.

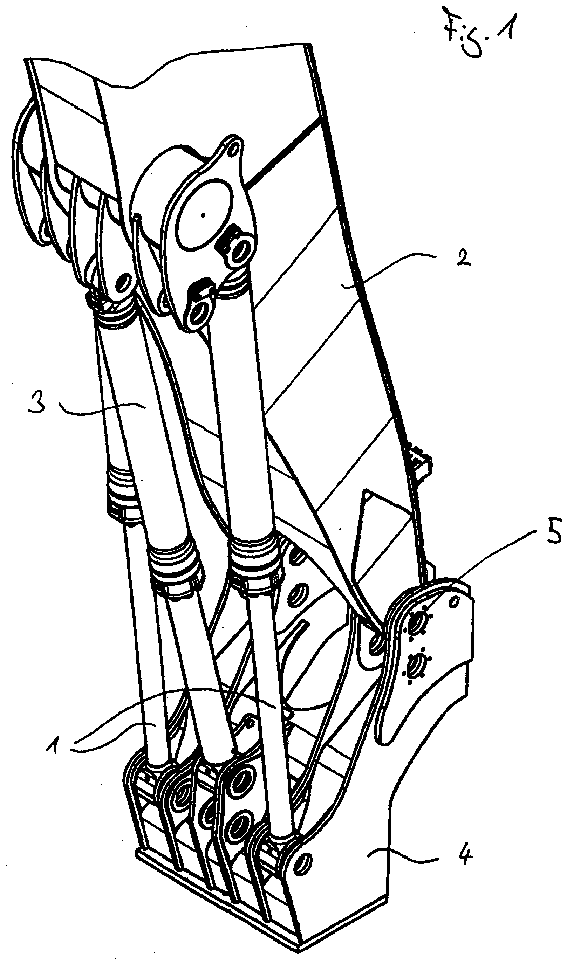

Anhand der Figuren 1 und 2 soll nun zunächst allgemein ein Ausführungsbeispiel eines Arbeitsgerätes mit einem Energierückgewinnungszylinder gezeigt werden, bei welchem die vorliegende Erfindung zum Einsatz kommen kann.

Das Arbeitgerät umfasst dabei einem bewegbares Element 2, welches über eine horizontal verlaufende Schwenkachse 5 an einer Schweißkonstruktion 4 des Arbeitsgerätes angelenkt ist. Bei dem Arbeitsgerät handelt es sich dabei um einen Hydraulikbagger, bei dem bewegbaren Element 2 um den Baggerstiel, welcher am Oberwagen des Baggers angelenkt ist. Der Oberwagen selbst ist dabei um eine vertikale Drehachse auf einem Unterwagen mit Fahrgestell drehbar angelenkt.

Zum Bewegen des bewegbaren Elementes 2 sind dabei zwei Arbeits-Hydraulikzylinder 1 vorgesehen, welche über entsprechende Anlenkpunkte am bewegbaren Element 2 sowie an der Schweißkonstruktion 4 des Oberwagens angelenkt sind. Weiterhin ist ein Ausführungsbeispiel eines erfindungsgemäßen Energierückgewinnungszylinders 3 vorgesehen, welcher wie die Arbeits-Hydraulikzylinder 1 zwischen dem bewegbaren Element 2 und dem Oberwagen des Arbeitsgerätes 4 angeordnet ist und der Energierückgewinnung aus der Bewegung des bewegbaren Elements dient. Der Energierückgewinnungszylinder 3 ist dabei zwischen den beiden Arbeits-Hydraulikzylindern 1 angeordnet.

An dem bewegbaren Element 2, in diesem Fall dem Baggerausleger, ist dabei üblicherweise eine Arbeitsausrüstung, zum Beispiel eine Baggerschaufel angeordnet. Beim Absenken des bewegbaren Elementes 2 soll nun die potentielle Energie des bewegbaren Elementes sowie der Arbeitsausrüstung rückgewonnen und gespeichert werden, um bei der Aufwärtsbewegung des bewegbaren Elements die statischen Kräfte, welche durch das Gewicht des bewegbaren Elements und der Arbeitsausrüstung sonst auf den Arbeits-Hydraulikzylindern lasten würden, zumindest teilweise zu kompensieren und so weniger Energie mittels der Arbeits-Hydraulikzylinder 1 zuführen zu müssen. Hierfür weist der erfindungsgemäße Hydraulikzylinder vorteilhafterweise eine mit Gas gefüllte Kammer auf. Bei einem Absenken des bewegbaren Elementes wird das Gas in der mit Gas gefüllten Kammer des Energierückgewinnungszylinders komprimiert, während es sich beim Anheben des bewegbaren Elementes ausdehnt und dabei die Arbeits-Hydraulikzylinder 1 unterstützt. Hierfür ist der erfindungsgemäße Energierückgewinnungszylinder vorteilhafterweise bodenseitig mit Gas befüllt und weist weiterhin vorteilhafterweise eine hohle, zur Bodenseite hin offene Kolbenstange auf.

In Fig. 2 a und 2 b sind nun Prinzipzeichnungen zweier Varianten eines Energierückgewinnungszylinders 3 gezeigt. Beide Ausführungsbeispiele weisen dabei einen Zylinder 10 auf, in welchem eine Kolbenstange 11 axial verschieblich gelagert ist. Die Kolbenstange 11 hat dabei die Form eines Hohlzylinders, so daß sich im Inneren der Kolbenstange 11 ein Hohlraum 13 ergibt, welcher zur Bodenseite 12 des Zylinders hin offen ist. Die Bodenseite 12 des Energierückgewinnungszylinders 3 und der Hohlraum 13 im Inneren der Kolbenstange 11 bilden dabei eine zusammenhängende Kammer, welche mit unter Druck stehendem Gas befüllt ist. Bei einer Bewegung der Kolbenstange 11 im Zylinder 10 verändert sich dabei die Größe der Bodenseite 12, so daß das mit Gas befüllte Volumen bei voll eingeschobener Kolbenstange 11 im Wesentlichen dem Hohlraum 13 im Inneren der hohlen Kolbenstange entspricht, bei voll ausgeschobener Kolbenstange dagegen dem Volumen dieses Hohlraums 13 plus dem Volumen des Zylinders 10.

Der Energierückgewinnungszylinder weist dabei ein bodenseitiges Lagerauge 15 und ein kolbenstangenseitiges Lagerauge 16 auf, mit welchen er am Arbeitsgerät und beweglichen Element angelenkt ist. Der Energierückgewinnungszylinder ist dabei zwischen bewegbarem Element und Arbeitsgerät so angelenkt, daß die Kolbenstange 11 durch das Gewicht des bewegbaren Elementes und der Arbeitsausrüstung nach unten gegen den Boden des Energierückgewinnungszylinders bewegt wird, so daß das Gasvolumen komprimiert wird. Durch die erfindungsgemäße Ausführung des Energierückgewinnungszylinders mit einer hohlen Kolbenstange 11 ist dabei auch bei eingefahrenem Zylinder ausreichend Gasvolumen vorhanden, um einen flachen Druckanstieg beim Senken der Arbeitsausrüstung zu ermöglichen. Umgekehrt ruht bei einer Aufwärtsbewegung des bewegbaren Elementes ein Teil des Gewichts auf dem Gasvolumen im Energierückgewinnungszylinder, so daß die Arbeits-Hydraulikzylinder nicht mehr die komplette statische Last aufbringen müssen.

Der Energierückgewinnungszylinder weist ein Befüllventil 17 zum Befüllen der Kammer mit Gas und ein Druckbegrenzungsventil 18 zur Begrenzung des Gasdrucks auf. Im ersten Ausführungsbeispiel in Fig. 2 a sind dabei das Befüllventil 17 und das Druckbegrenzungsventil 18 bodenseitig angeordnet. In dem in Figur 2 b gezeigten zweiten Ausführungsbeispiel sind das Befüllventil 17 und das Druckbegrenzungsventil 18 dagegen kolbenstangenseitig angeordnet.

Bei den in Fig. 2a und 2b gezeigten Energierückgewinnungszylindern handelt es sich um einseitige Zylinder, bei welchen allein die mit Gas gefüllte Kammer 12 als Druckkammer vorgesehen ist und die Kolbenstange 11 über eine Dichtungsanordnung 25 am Ende des Zylindermantels 10 gelagert ist. Die Bodenseite kann allerdings einen Anschluß aufweisen, über welche sie an ein Hydrauliksystem des Arbeitsgerätes anschließbar ist.

Wie in Fig. 2 b gezeigt, kann das Gasvolumen im Energierückgewinnungszylinder dabei durch Zuführen oder Abführen von Öl zum Energierückgewinnungszylinder verändert werden. Hierfür ist im zweiten Ausführungsbeispiel in Fig. 2 b ein Anschluß 20 zu Versorgung mit Öl vorgesehen, über welchen der Bodenraum des Energierückgewinnungszylinders an ein Hydrauliksystem des Arbeitsgerätes anschließbar ist.

In Fig. 3 und 4 sind nun zwei Ausführungsbeispiele einer erfindungsgemäßen Dichtungsanordnung gezeigt, welche beispielweise bei den oben gezeigten Energierückgewinnungszylindern eingesetzt werden können. Die Dichtungsanordnung dient dabei jeweils zur Abdichtung der mit Gas gefüllten Kammer und weist einen mit Öl gefüllten Ringraum 30 auf. Zwischen dem mit Öl gefüllten Ringraum 30 und der mit Gas gefüllten Kammer 12 ist dabei jeweils eine Gasdichtung 31 vorgesehen. Auf der anderen Seite des mit Öl gefüllten Ringraums 30 ist dagegen ein Hydraulikdichtungspaket 32 vorgesehen, welches aus einem oder mehreren Dichtbereichen bestehen kann.

Der mit Öl gefüllte Ringraum 30 weist dabei jeweils eine Entlüftungsstelle 36 auf, durch welche sich im Ringraum 30 sammelndes Gas entweichen kann. Die Entlüftungsstelle 36 ist dabei über einen Verbindungskanal 34 mit der Gas befüllten Kammer 12 verbunden. Dabei ist in diesem Verbindungskanal 34 ein Rückschlagventil 35 angeordnet. Dieses verhindert, daß Gas aus der mit Gas gefüllten Kammer 12 über die Verbindungsleitung 34 in den Ringraum 36 gedrückt werden kann und so das Hydraulikfluid aus diesem Ringraum herausdrückt. Umgekehrt kann Gas aus dem Ringraum 36 in die mit Gas gefüllte Kammer 12 abströmen. Die Verbindungsleitung sorgt so für einen Druckausgleich zwischen dem Ringraum 36 und der mit Gas gefüllten Kammer 12.

Die erfindungsgemäße Dichtungsanordnung 25 ist dabei in beiden Ausführungsbeispielen am Ende des Zylindermantels 10 angeordnet. Anschließend an die Dichtungsanordnung 25 existiert dabei im Inneren des Zylindermantels zwischen der Außenfläche der Zylinderstange 11 und der Innenfläche des Zylindermantels ein Ringraum 12', welcher mit Gas gefüllt ist und einen Teil der mit Gas gefüllten Kammer 12 bildet. Vorteilhafterweise steht dieser mit Gas gefüllte Ringraum 12' dabei mit der Bodenseite bzw. mit dem hohlen Inneren 13 der Kolbenstange 11 in Verbindung.

Vorteilhafterweise ist der Verbindungskanal 34 dabei so angeordnet, daß er den mit Öl gefüllten Ringraum 30 mit dem mit Gas gefüllten Ringraum 12' zwischen der Außenfläche der Kolbenstange 11 und der Innenfläche des Zylindermantels 10 verbindet.

Bei dem in Fig. 3 gezeigten Ausführungsbeispiel ist der mit Öl gefüllte Ringraum 30 an der Innenseite des Zylindermantels 10 angeordnet. Ebenso sind die Gasdichtung 31 und die Hydraulikdichtungspakete 32 dort angeordnet. Insbesondere bilden diese dabei Nuten im Zylindermantel 10. Der Bereich des Zylindermantels 10, welcher die Dichtungsanordnung 25 enthält, kann dabei einstückig mit dem restlichen Zylindermantel 10 ausgeführt sein. Alternativ kann es sich auch um ein aufgesetztes Teilstück des Zylindermantels 10 handeln.

Der Verbindungskanal 34 mit dem Rückschlagventil 35 wird dabei bei dem in Fig. 3 gezeigten Ausführungsbeispiel durch einen Ventilblock 33 gebildet, welcher außen auf den Zylindermantel 10 aufgesetzt ist und auf einer Seite mit der Entlüftungsstelle 36 und auf der anderen Seite mit der mit Gas gefüllten Kammer 12 verbunden wird. Dies erfolgt durch Bohrungen durch den Zylindermantel 10 hindurch.

Bei dem in Fig. 4 gezeigten Ausführungsbeispiel ist dagegen ein Ringelement 33 vorgesehen, welches am Ende des Zylindermantels 10 angeordnet wird und mit seiner Innenfläche eine vorspringende Stufe zur Innenfläche des Zylindermantels 10 bildet. An dieser Innenfläche sind die Kammern für den mit Öl gefüllten Ringraum 30, die Gasdichtung 31 und die Hydraulikdichtung 32 angeordnet. In dem Ringelement 33 sind weiterhin die Kanäle für die Entlüftungsstelle 36, den Verbindungskanal 34 und das darin angeordnete Rückschlagventil 35 vorgesehen. Der Entlüftungskanal 34 verläuft dabei parallel zur Zylinderachse durch die Stufe in den Ringraum 12' zwischen der Außenfläche der Kolbenstange und der Innenfläche des Zylindermantels 10.

Der Energierückgewinnungszylinder ist dabei so am Arbeitsgerät angeordnet, daß er schräg oder waagrecht ausgerichtet ist und die Entlüftungsstelle 36 so angeordnet ist, daß sie sich am höchsten Punkt des Ringraums 30 befindet. Die Entlüftungsstelle 36 erstreckt sich dabei von dem Ringraum 30 weg in radiale Richtung. So sammelt sich das Gas an der Entlüftungsstelle 36 und kann entweichen.

Das erfindungsgemäße Ölpolster zwischen Dichtungspaket und Gaskammer bildet so zusätzlich zu den verbauten Dichtelementen eine Barriere gegen eine mögliche Gasdiffusion.

Im Betrieb kann allerdings nicht verhindert werden, daß Gas in den mit Öl gefüllten Ringraum 30 gelangt. Es wird daher zwischen dem mit Öl gefüllten Ringraum 30 und die Gaskammer 12 ein Ventilblock verbaut. Dieser wird an einer Stelle angeordnet, an der sich das Gas sammelt. Der Ventilblock mit dem eingebauten Rückschlagventil 35 dient dazu, die Kammern (Öl/Gas) stets druckausgeglichen zu halten. Durch das Rückschlagventil 35 wird verhindert, daß Öl in den Gasraum 12 gedrückt wird und sich die Ölkammer 30 entleert.

Der erfindungsgemäße Energierückgewinnungszylinder kann dabei ohne Hydrauliköl betrieben werden, da das Ölreservoir 30 als Schmierung für die Dichtung, Abstreifer und Führungsbänder dient.

## Patentansprüche

1. Arbeitsgerät, insbesondere Bagger oder Maschine zum Materialumschlag, mit einem über mindestens einen Arbeits-Antrieb bewegbaren Element, wobei mindestens ein Energierückgewinnungszylinder (3) zur Energierückgewinnung aus der Bewegung des bewegbaren Elements vorgesehen ist, welcher einen Zylindermantel (10) und eine Zylinderstange (11) aufweist, wobei der Zylindermantel (10) eine mit Gas befüllte Kammer (12) definiert,
**dadurch gekennzeichnet, dass**
eine Dichtungsanordnung (25) zur Abdichtung der mit Gas gefüllten Kammer (12) vorgesehen ist, welche am Ende des Zylindermantels (10) angeordnet ist und einen mit Öl gefüllten Ringraum (30) aufweist, wobei anschließend an die Dichtungsanordnung (25) im Inneren des Zylindermantels (10) zwischen der Außenfläche der Zylinderstange (11) und der Innenseite des Zylindermantels (10) ein mit Gas gefüllter Ringraum (12') existiert, welcher einen Teil der mit Gas gefüllten Kammer (12) bildet, wobei ein Verbindungskanal (34) zum Verbinden des mit Öl gefüllten Ringraumes (30) mit dem mit Gas gefüllten Ringraum (12') vorgesehen ist und wobei in dem Verbindungskanal (34) ein Rückschlagventil (35) angeordnet ist, welches mit der Öffnungsrichtung von dem mit Öl gefüllten Ringraum (30) zu dem mit Gas gefüllten Ringraum (12') ausgerichtet ist und ein Entweichen von Gas aus dem mit Öl gefüllten Ringraum (30) in den mit Gas gefüllten Ringraum (12') ermöglicht.

2. Arbeitsgerät nach Anspruch 1, **dadurch gekennzeichnet, dass** der Verbindungskanal (34) im Wesentlichen parallel zur Längsachse des Energierückgewinnungszylinders (3) verläuft.

3. Arbeitsgerät nach einem der vorhergehenden, **dadurch gekennzeichnet, dass** die Dichtungsanordnung (25) weiterhin eine Gasdichtung (31) umfasst, welche vorteilhafterweise zwischen dem mit Öl gefüllten Ringraum (30) und der mit Gas gefüllten Kammer (12) angeordnet ist.

4. Arbeitsgerät nach einem der vorhergehenden Ansprüche, **dadurch gekennzeichnet, dass** die Dichtungsanordnung (25) weiterhin eine Hydraulikdichtung (32) umfasst, welche vorteilhafterweise in Bezug auf die mit Gas gefüllte Kammer (12) nach dem mit Öl gefüllten Ringraum (30) angeordnet ist.

5. Arbeitsgerät nach einem der vorhergehenden Ansprüche, **dadurch gekennzeichnet, dass** der mit Öl gefüllte Ringraum (30) auf einer Seite eine Entlüftungsstelle (36) aufweist, wobei vorteilhafterweise die Entlüftungsstelle (36) an der höchsten Position des Ringraumes (30) angeordnet ist.

6. Arbeitsgerät nach Anspruch 5, **dadurch gekennzeichnet, dass** der Verbindungskanal (34) die Entlüftungsstelle (36) mit der mit Gas gefüllten Kammer (12) verbindet.

7. Arbeitsgerät nach einem der vorangegangenen Ansprüche, **dadurch gekennzeichnet, dass** der mit Öl gefüllte Ringraum (30) der Schmierung des Energierückgewinnungszylinders (3) dient und/oder wobei der Energierückgewinnungszylinder (3) ein einseitiger Zylinder mit nur einem Druckraum ist.

8. Arbeitsgerät nach einem der vorangegangenen Ansprüche, **dadurch gekennzeichnet, dass** der Energierückgewinnungszylinder (3) bodenseitig mit Gas befüllt ist und die Dichtungsanordnung (25) zwischen einer Kolbenstange (11) und einem Zylindermantel (10) vorgesehen ist, wobei vorteilhafterweise die Dichtungsanordnung (25) am Zylindermantel (10) angeordnet ist und/oder wobei die Kolbenstange (11) hohl ausgeführt ist.

## Claims

1. Working device, in particular an excavator or a machine for material handling, having an element movable via at least one working drive, wherein at least one energy recovery cylinder (3) is provided for recovering energy from the movement of the movable element, which energy recovery cylinder comprises a cylinder jacket (10) and a cylinder rod (11), wherein the cylinder jacket (10) defines a chamber (12) filled with gas,
**characterized in that**
a sealing arrangement (25) is provided for sealing the chamber (12) filled with gas, which is arranged at the end of the cylinder jacket (10) and includes an annular space (30) filled with oil, wherein, adjacent to the sealing arrangement (25), an annular space (12') filled with gas exists inside the cylinder jacket (10) between the outer surface of the cylinder rod (11) and the inner side of the cylinder jacket (10), which annular space (12') forms a part of the chamber (12) filled with gas, wherein a communication passage (34) for connecting the annular space (30) filled with oil to the annular space (12') filled with gas is provided, and wherein a check valve (35) is arranged in the communication passage (34), which is aligned with the opening direction of the annular space (30) filled with oil to the annular space (12') filled with gas, and which allows gas to escape from the annular space (30) filled with oil into the annular space (12') filled with gas.

2. Working device according to claim 1, **characterized in that** the communication passage (34) extends essentially parallel to the longitudinal axis of the energy recovery cylinder (3).

3. Working device in accordance with any one of the preceding claims, **characterized in that** the sealing arrangement (25) furthermore includes a gas seal (31), which is advantageously arranged between the annular space (30) filled with oil and the chamber (12) filled with gas.

4. Working device in accordance with any one of the preceding claims, **characterized in that** the sealing arrangement (25) furthermore includes a hydraulic seal (32) which is advantageously arranged behind the annular space (30) filled with oil, with respect to the chamber (12) filled with gas.

5. Working device in accordance with any one of the preceding claims, **characterized in that** the annular space (30) filled with oil comprises a venting point (36) on one side, wherein the venting point (36) advantageously is arranged at the highest position of the annular space (30).

6. Working device in accordance with claim 5, **characterized in that** the communication passage (34) connects the venting point (36) to the chamber (12) filled with gas.

7. Working device in accordance with any one of the preceding claims, **characterized in that** the annular space (30) filled with oil serves the lubrication of the energy recovery cylinder (3) and/or wherein the energy recovery cylinder (3) is a one-sided cylinder with only one pressure space.

8. Working device in accordance with one of the preceding claims, **characterized in that** the energy recovery cylinder (3) is filled with gas at the base side, and the sealing arrangement (25) is provided between a piston rod (11) and a cylinder jacket (10), wherein the sealing arrangement (25) advantageously is arranged at the cylinder jacket (10) and/or wherein the piston rod (11) is designed to be hollow.

## Revendications

1. Appareil de travail, notamment excavatrice ou machine pour le transfert de matériaux, comprenant un élément déplaçable par le biais d'au moins un entraînement de travail, au moins un vérin de récupération d'énergie (3) étant prévu pour la récupération d'énergie produite par le déplacement de l'élément déplaçable, ledit vérin de récupération d'énergie comportant une enveloppe de vérin (10) et une tige de vérin (11), l'enveloppe de vérin (10) définissant une chambre (12) remplie de gaz,
**caractérisé en ce que**
un agencement d'étanchéité (25), qui est disposé à l'extrémité de l'enveloppe de vérin (10) et comporte un espace annulaire (30) rempli d'huile, est prévu pour rendre étanche la chambre (12) remplie de gaz, un espace annulaire (12') rempli de gaz, qui forme une partie de la chambre (12) remplie de gaz, se trouvant juste après l'agencement d'étanchéité (25) à l'intérieur de l'enveloppe de vérin (10) entre la surface extérieure de la tige de vérin (11) et la face intérieure de l'enveloppe de vérin (10), un conduit de liaison (34) étant prévu pour relier l'espace annulaire (30) rempli d'huile à l'espace annulaire (12') rempli de gaz et un clapet antiretour (35) étant disposé dans le conduit de liaison (34), ledit clapet antiretour étant orienté s'ouvrant de l'espace annulaire (30) rempli d'huile vers l'espace annulaire (12') rempli de gaz et permettant l'échappement de gaz hors de l'espace annulaire (30) rempli d'huile vers l'espace annulaire (12') rempli de gaz.

2. Appareil de travail selon la revendication 1, **caractérisé en ce que** le conduit de liaison (34) s'étend sensiblement parallèlement à l'axe longitudinal du vérin de récupération d'énergie (3).

3. Appareil de travail selon l'une des revendications précédentes, **caractérisé en ce que** l'agencement d'étanchéité (25) comprend en outre un joint pneumatique (31), qui est disposé de manière avantageuse entre l'espace annulaire (30) rempli d'huile et la chambre (12) remplie de gaz.

4. Appareil de travail selon l'une des revendications précédentes, **caractérisé en ce que** l'agencement d'étanchéité (25) comprend en outre un joint hydraulique (32), qui est disposé de manière avantageuse après l'espace annulaire (30) rempli d'huile par rapport à la chambre (12) remplie de gaz.

5. Appareil de travail selon l'une des revendications précédentes, **caractérisé en ce que** l'espace annulaire (30) rempli d'huile comporte d'un côté un point de purge d'air (36), le point de purge d'air (36) étant disposé de manière avantageuse à l'emplacement le plus haut de l'espace annulaire (30).

6. Appareil de travail selon la revendication 5, **caractérisé en ce que** le conduit de liaison (34) relie le point de purge d'air (36) à la chambre (12) remplie de gaz.

7. Appareil de travail selon l'une des revendications précédentes, **caractérisé en ce que** l'espace annulaire (30) rempli d'huile sert à lubrifier le vérin de récupération d'énergie (3) et/ou dans lequel le vérin de récupération d'énergie (3) est un vérin à simple effet avec seulement une chambre de pression.

8. Appareil de travail selon l'une des revendications précédentes, **caractérisé en ce que** le vérin de récupération d'énergie (3) est rempli de gaz côté fond et l'agencement d'étanchéité (25) est prévu entre une tige de piston (11) et une enveloppe de vérin (10), l'agencement d'étanchéité (25) étant disposé de manière avantageuse sur l'enveloppe de vérin (10) et/ou la tige de piston (11) étant réalisée creuse.
